# EUROPÄISCHE PATENTSCHRIFT

(11) **EP 1 034 412 B1**
(45) Veröffentlichungstag und Bekanntmachung des Hinweises auf die Patenterteilung: **24.04.2002**
(21) Anmeldenummer: 98963465.4
(22) Anmeldetag: 17.11.1998
(51) Int. Cl.: G01B 7/02, G01B 7/00, G01D 5/24, H03K 17/955

(54) **KAPAZITIVE DISTANZMESSUNG MIT EINER NICHT IDEALEN MESSELEKTRODE**
CAPACITIVE DISTANCE MEASUREMENT USING A NON-IDEAL MEASURING ELECTRODE
MESURE DE DISTANCE CAPACITIVE A L'AIDE D'UNE ELECTRODE DE MESURE NON IDEALE

(30) Priorität: 28.11.1997 LU 90180; 30.04.1998 LU 90237
(43) Veröffentlichungstag der Anmeldung: 13.09.2000
(73) Patentinhaber: IEE International Electronics & Engineering S.A.R.L., 2632 Luxembourg (LU)
(72) Erfinder: LAMESCH, Laurent, L-4881 Lamadelaine (LU)
(74) Vertreter: Beissel, Jean
(86) Internationale Anmeldenummer: EP9807343
(87) Internationale Veröffentlichungsnummer: WO9928702

(56) Entgegenhaltungen:
- EP-A- 0 091 288
- EP-A- 0 448 988
- EP-A- 0 734 986
- DE-A- 2 744 785
- US-A- 4 998 103
- US-A- 5 337 015
- US-A- 5 489 888

## Beschreibung

Die vorliegende Erfindung betrifft ein Verfahren zur Distanzmessung mittels einem kapazitiven Sensor. Ein solches Verfahren findet seine Anwendung beispielsweise bei der Detektion der Sitzposition eines Passagiers in einem Fahrzeug zur Steuerung z.B. eines vorhandenen Airbags.

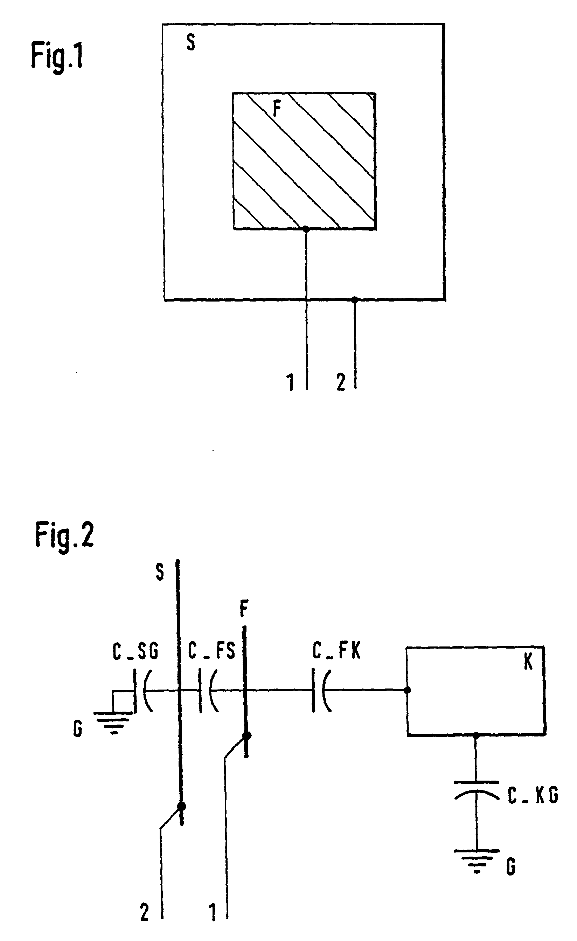

Eine Ansicht einer bekannten kapazitiven Meßelektrode (siche biespielsweise EP-A-0 091 288) ist in Fig. 1 dargestellt, das Ersatzschaltbild der Meßelektrode mit zu detektierendem Körper ist in Fig. 2 gezeigt.

Das Meßprinzip eines derartigen kapazitiven Sensors beruht auf der Tatsache, daß ein vorhandener Körper K einerseits eine Kapazität C_KG gegenüber der Masse G und andererseits eine Kapazität C_FK gegenüber einer Meßelektrode F aufweist. Die Kapazität C_FK ist hierbei abhängig von der Position des Körpers zu der Meßelektrode.

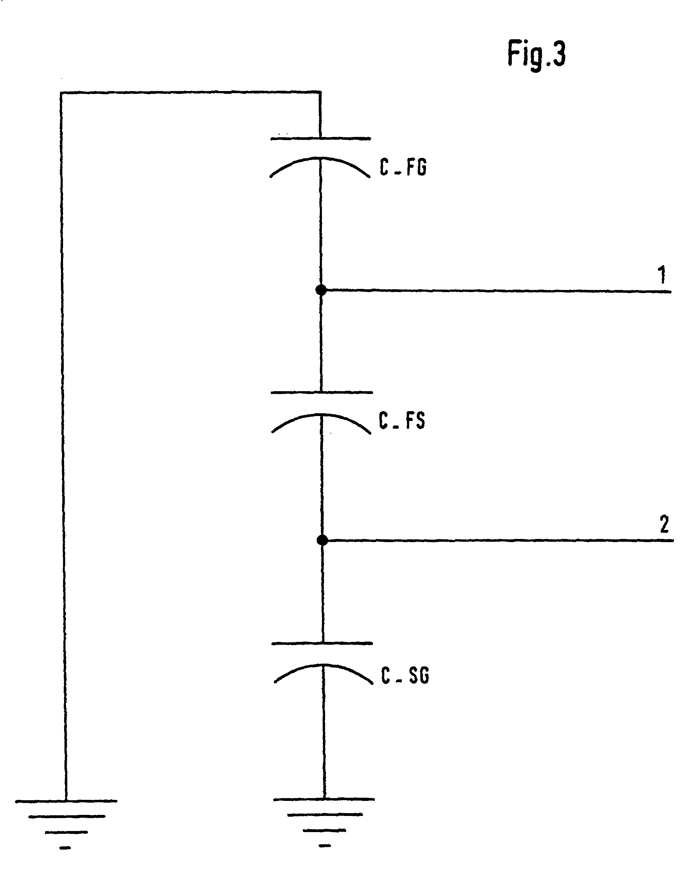

Unter der Annahme, daß die Kapazität des Körpers gegenüber der Masse C_KG sehr viel größer als die Kapazität gegenüber der Meßelektrode C_FK ist, ist die Kapazität C_FG zwischen der Meßelektrode F und der Masse G ungefähr die gleiche wie C_FK. Damit kann mit der Messung der Kapazität C_FG die Kapazität C_FK und damit die relative Position von K gegenüber F bestimmt werden. Eine vereinfachte Ersatzschaltung hierzu ist in Fig. 3 dargestellt.

Der kapazitive Sensor umfaßt eine Fühlerelektrode F und eine Schirmelektrode S, die auf der dem Körper K abgewandten Seite der Fühlerelektrode F in einem gewissen Abstand zu dieser angeordnet ist. Die Schirmelektrode S wird mit einer gewissen Wechselspannung betrieben, die Fühlerelektrode F wird auf dem gleichen Potential wie die Schirmelektrode S gehalten, damit nur die Kapazität zwischen F und Masse G in Richtung des Körpers K gemessen wird.

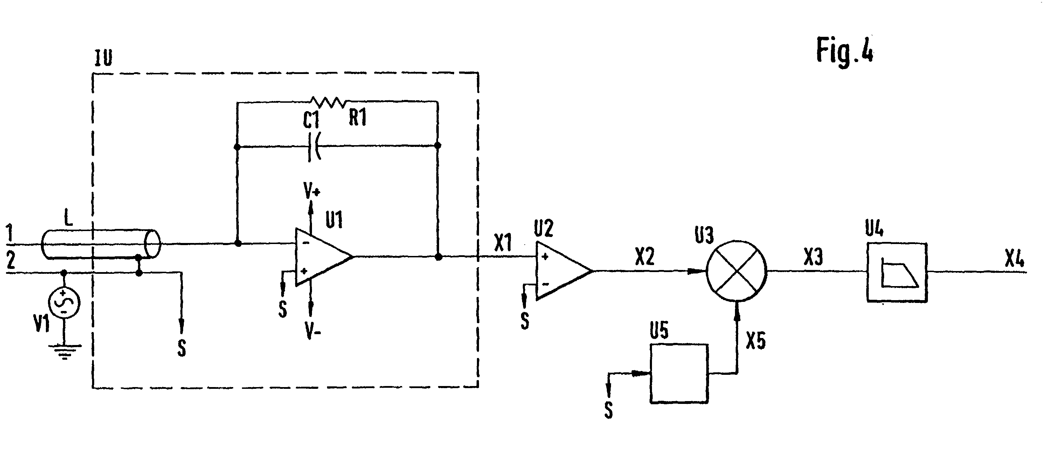

Die Bestimmung der Kapazität C_FK erfolgt im allgemeinen mit der in Fig. 4 dargestellten Auswerteschaltung. Die an Knoten 1 angeschlossene Fühlerelektrode ist dabei mittels einer abgeschirmten Leitung L mit der Schaltung verbunden, um parasitäre Kapazitäten zwischen Knoten 1 und G zu verhindern.

An die Schirmelektrode (angeschlossen an 2) wird eine Wechselspannung angelegt, die von der Quelle V1 erzeugt wird. Ein Strom-nach-Spannungswandler IU, der lediglich aus einem Operationsverstärker U1, einer Kapazität C1 und einem Widerstand R1 aufgebaut ist, hält im Idealfall die an 1 angeschlossene Meßelektrode auf dem gleichen Potential wie die an 2 angeschlossene Schirmelektrode. C1 bildet den Rückkopplungspfad für den Frequenzbereich, in dem die Schaltung arbeitet und R1 bildet den Gleichstromrückkopplungspfad.

Der Strom der über die zu bestimmende Kapazität C_FG von der Fühlerelektrode F nach Masse abfließt, wird von dem Strom-nach-Spannungswandler IU in eine Spannungsdifferenz zwischen den Knoten X1 und S umgewandelt. Ein Differenzverstärker U2 wandelt diese Spannungsdifferenz in eine Spannung gegen Masse an X2 um.

Diese Spannungsdifferenz wird anschließend von einem Synchrondemodulator U3 in eine Gleichspannung mit überlagerter Wechselspannung an X3 und einem Tiefpaßfilter U4 in eine Gleichspannung an U4 umgewandelt. Der Demodulator U3 erhält ein Referenzsignal X5, das einer phasenverschobenen Version der Wechselspannung am Knoten S entspricht und das in Phase mit der Wechselspannung an X2 ist. Die Phasenverschiebung wird von einem Phasenschieber U5 erzeugt. Die Gleichspannung an X4 hängt somit von der Wechselspannung an X2 gegen Masse und damit von der Wechselspannungsdifferenz zwischen X1 und S, und damit von dem Strom der von 1 nach Masse abfließt, und damit von der Kapazität zwischen 1 und Masse ab.

Ein Nachteil dieser Auswerteschaltung liegt in der Abhängigkeit der gemessenen Spannung von der Kapazität C_FS zwischen der Fühlerelektrode F und der Schirmelektrode S. In der Tat hängt die Spannungsdifferenz zwischen X1 und S nicht nur von der zu bestimmenden Kapazität C_FG sondern auch von der Kapazität zwischen Meß- und Schirmelektrode C_FS ab, weil C_FS die Schleifenverstärkung des mit U1 und C1 aufgebauten Strom-nach-Spannungswandler so weit verringert, daß das Resultat der Kapazitätsmessung nicht mehr ausreichend genau ist. Die wirkt sich insbesondere bei Schwankungen von C_FS aufgrund von mechanischer Beanspruchung des Sensors äußerst negativ auf die Genauigkeit der bestimmten Position des Körpers aus.

Aufgabe der vorliegenden Erfindung ist es folglich, einen kapazitiven Sensor vorzuschlagen, der diese Abhängigkeit des gemessenen Signals von der Kapazität C_FS verringert.

Diese Aufgabe wird erfindungsgemäß gelöst durch einen kapazitiven Sensor, mit einer Fühlerelektrode, einer in einem gewissen Abstand zur Fühlerelektrode angeordneten Schirmelektrode und einer Auswerteschaltung, wobei Fühlerelektrode und die Schirmelektrode mit der Auswerteschaltung verbunden sind und die Schirmelektrode mit einer Wechselspannung beaufschlagt wird, und wobei die Auswerteschaltung einen zwischen die Fühlerelektrode und die Schirmelektrode geschalteten Strom-nach-Spannungswandler aufweist, der einen von der Fühlerelektrode zur Masse abfließenden Strom in eine dazu proportionale Spannung umwandelt. Erfindungsgemäß ist zwischen dem Strom-nach-Spannungswandler und der Fühlerelektrode ein erster Transistorverstärker derart verschaltet, daß eine Spannungsdifferenz zwischen der Schirmelektrode und der Fühlerelektrode minimiert wird.

Der zwischen den Strom-nach-Spannungswandler und der Fühlerelektrode verschaltete Transistorverstärker gleicht die über dem Strom-nach-Spannungswandler abfallende Spannung weitgehend aus, so daß dessen Eingangsimpedanz gegenüber der Kapazität C_FS vernachlässigbar wird. Der Wechselspannungsabfall an der Kapazität C_FS und damit der über die Kapazität C_FS abfließende Strom gehen folglich gegen Null, so daß der an dem Strom-nach-Spannungswandler gemessene Strom von der Kapazität C_FS nahezu unabhängig wird.

Der Transistorverstärker umfaßt vorzugsweise einen in Basisschaltung betriebenen Bipolartransistor oder einen in Gateschaltung betriebenen Feldeffekttransistor, dessen Basis-Emitter-Strecke bzw. Gate-Source-Strecke zwischen die Schirmelektrode und die Fühlerelektrode geschaltet ist.

In einer vorteilhaften Ausgestaltung umfaßt der Strom-nach-Spannungswandler eine passive lmpedanz. Dies kann beispielsweise ein ohmscher Widerstand sein, der von dem zu messenden Strom durchflossen wird. Der Widerstand kann dabei gleichzeitig zur Arbeitspunkteinstellung des Transistorverstärkers dienen.

In einer alternativen Ausgestaltung umfaßt der Strom-nach-Spannungswandler einen aktiven Strom-nach-Spannungswandler, z.B. einen zusätzlichen Transistor oder einen als Strom-nach-Spannungswandler beschalteten Operationsverstärker. Hierdurch wird hohe Strom-nach-Spannungsverstärkung erreicht.

Eine weitere Minimierung der Eingangsimpedanz des Strom-nach-Spannungswandier wird durch einen Regeltransistor, der beim Auftreten einer Spannungsdifferenz zwischen Schirmelektrode und der Fühlerelektrode den Transistorverstärker derart nachregelt, daß die Spannungsdifferenz minimiert wird.

In einer weiteren vorteilhaften Ausgestaltung wird die Eingangsimpedanz des Strom-nach-Spannungswandlers durch mehrere, dem ersten Transistorverstärker parallel geschaltete Transistorverstärker erreicht.

Die Versorgungsspannungen des Strom-nach-Spannungswandlers sind vorzugsweise wechsefspannungsmäßig auf das Potential der Schirmelektrode geschaltet. Hierdurch können parasitäre Kapazitäten zwischen jedem Knoten des Strom-nach-Spannungswandlers und der Masse derart unterdrückt werden, daß sie das Meßergebnis nicht stören.

Im folgenden wird nun eine Ausgestaltung der Erfindung anhand der beiliegenden Figuren beschrieben. Es zeigen:
- Fig.1:: eine Ansicht einer kapazitiven Meßelektrode,
- Fig.2:: das Ersatzschaltbild der Meßelektrode mit zu detektierendem Körper,
- Fig.3:: eine vereinfachte Ersatzschaltung,
- Fig.4:: eine Auswerteschaltung (Stand der Technik),
- Fig.5:: das Kleinsignalersatzschaltbild einer ersten Ausgestaltung einer verbesserten Auswerteschaltung, ohne Arbeitspunkteinstellungen des Strom-nach-Spannungswandlers;
- Fig.6:: die Schaltung nach Fig. 5 mit Arbeitspunkteinstellungen des Strom-nach-Spannungswandlers;
- Fig.7:: das ergänzte Kleinsignalersatzschaltbild der Schaltung nach Fig. 5, mit Zuleitungswiderstand R_G1 und Spannungsquelle V1
- Fig.8:: das Kleinsignalersatzschaltbild einer zweiten Ausgestaltung einer Auswerteschaltung
- Fig.9:: das Kleinsignalersatzschaltbild einer dritten Ausgestaltung einer Auswerteschaltung
- Fig.10:: eine Ausgestaltung einer Meßelektrode zum Betreiben mit einer der Auswerteschaltungen nach Fig. 8 oder 9
- Fig.11:: eine Ausgestaltung einer Auswerteschaltung mit aktivem Strom-nach-Spannungswandler;
- Fig.12:: ein Ersatzschaltbild einer vorteilhaften Schaltung zur Erzeugung der Versorgungsspannungen des Strom-nach-Spannungswandlers;
- Fig.13:: eine erste technische Ausgestaltung der Schaltung der Spannungsversorgung;
- Fig.14:: eine zweite technische Ausgestaltung der Schaltung der Spannungsversorgung;
- Fig. 15, 16:: alternative Ausgestaltungen von Auswerteschaltungen;
- Fig. 17-Fig. 20:: verschiedene Schaltungen zur Überprüfung der kapazitiven Sensoren und der zugehörigen Auswerteschaltung.

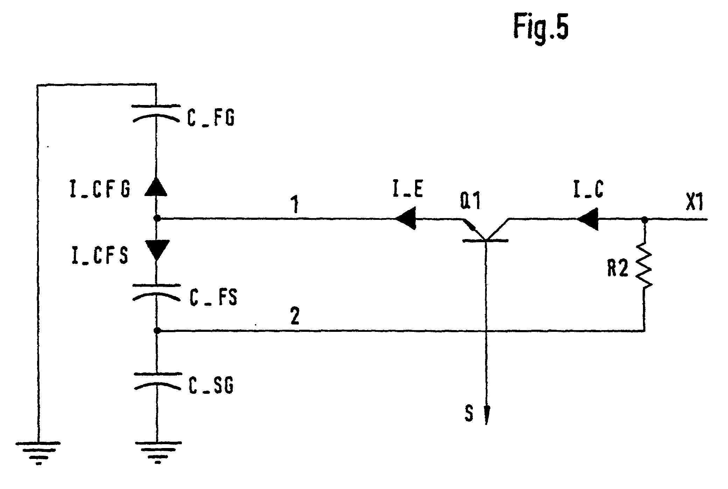

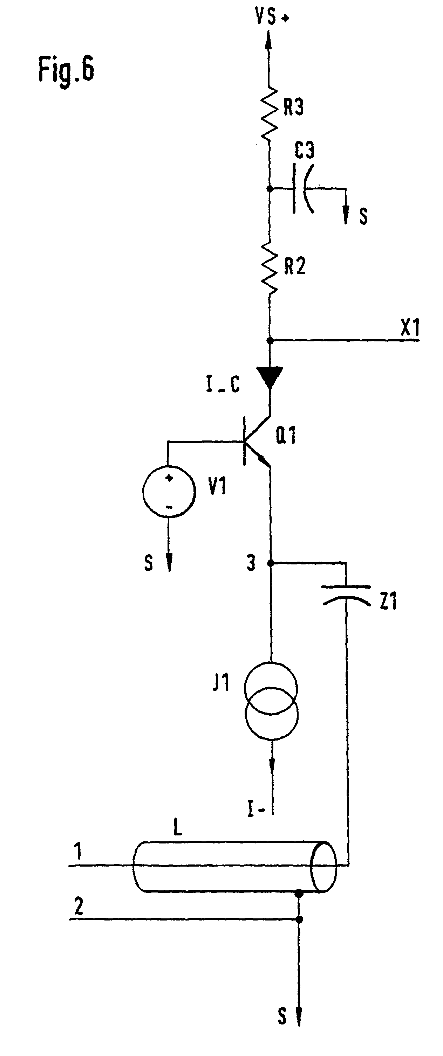

Eine erste vorteilhafte Ausgestaltung der Erfindung ist in den Figuren 5 und 6 dargestellt. Bei dieser Ausgestaltung ist der Strom-nach-Spannungswandler der Schaltung aus Fig. 4 durch einen Widerstand R2 ersetzt, wobei zwischen dem Widerstand und der Fühlerelektrode ein Transistorverstärker Q1 verschaltet ist, dessen Basis bzw. Gate wechselspannungsmäßig auf dem Potential von S liegt.

Transistor Q1, der entweder ein Bipolar- oder Feldeffekttransistor sein kann, wird in Basis- bzw. Gateschaltung betrieben. I_CFG ist der Strom der durch die zu bestimmende Kapazität C_FG fließt und damit der Strom, der bestimmt werden soll. I_CFS ist der Strom, der durch die Kapazität C_FS fließt.

Die Eingangsimpedanz des Transistorverstärkers ist die lmpedanz des Transistor Q1 zwischen seinem Emitter und seiner Basis bzw. Source und Gate. Diese Impedanz ist viel kleiner als die Impedanz der Kapazität C_FS in dem Frequenzbereich in dem die Schaltung arbeitet. Aus diesem Grund ist der Strom I_CFS, der durch die Kapazität C_FS fließt vernachlässigbar klein, und der Strom I_E, der aus dem Transistor hinausfließt ist, abgesehen von einem vernachlässigbar kleinen Fehler, derselbe wie I_CFG. Der Strom I_C der in den Transistor hineinfließt, ist abgesehen von einem vernachlässigbar kleinen Fehler, der von dem Verstärkungsfaktor des Transistors abhängt, derselbe wie I_E. Der Spannungsabfall über dem Widerstand R2, der vom Strom I_E hervorgerufen wird, ist damit abgesehen von einem vernachlässigbar kleinen Fehler proportional zu der zu bestimmenden Kapazität C_FG.

In Fig. 6 ist die gleiche Schaltung mit Arbeitspunkteinstellung, ohne Ersatzschaltbild der Meßelektrode gezeigt. Die Stromquelle J1, Spannungsquelle V1 und Widerstand R2 stellen den Arbeitspunkt von Q1 ein. Das Tiefpaßfilter, das von R3 und C3 gebildet wird, verhindert eine Einkopplung von Störsignalen von der Versorgungsspannung auf den gewünschten Spannungsabfall über R2.

Die Stromquelle J1 kann durch eine passive Impedanz ersetzt werden. Der Knoten I- wird an einen Knoten mit einem geeigneten Potential verbunden, so daß die Stromquelle J1 sich in ihrem Arbeitsbereich befindet und der Transistor Q1 seinen Arbeitspunkt erreicht. Um eine hohe Gleichtaktunterdrückung an Q1 zu erreichen wird I- mit einem Knoten verbunden, der das gleiche Wechselspannungspotential wie S besitzt.

Der Kondensator Z1, der ein Abfließen eines Gleichstromanteils über die Fühlerelektrode verhindert, muß eine lmpedanz besitzen, die kleiner als oder mindestens im Bereich liegen muß wie die lmpedanz von Q1 zwischen den Knoten 3 und S. Wenn eine Gleichspannungsdifferenz zwischen den Knoten 1 und 2 toleriert werden kann, kann Z1 weggelassen werden.

Widerstand R2 kann ein ohmscher Widerstand sein. Um bei einer gegebenen zu bestimmenden Kapazität C_FG einen höheren Spannungsabfall über R2 zu erreichen, kann R2 eine Impedanz besitzen, die in dem Frequenzbereich, in dem die Schaltung arbeitet, höher ist als bei Gleichspannung. Dies kann durch eine Induktivität erreicht werden, z.B. eine drahtgewickelte Spule oder eine aktive Schaltung. Eine solche Ausgestaltung ist insbesondere dann vorteilhaft, wenn der Widerstand R2 auch zum Einstellen des Arbeitspunktes des Transistors Q1 dient.

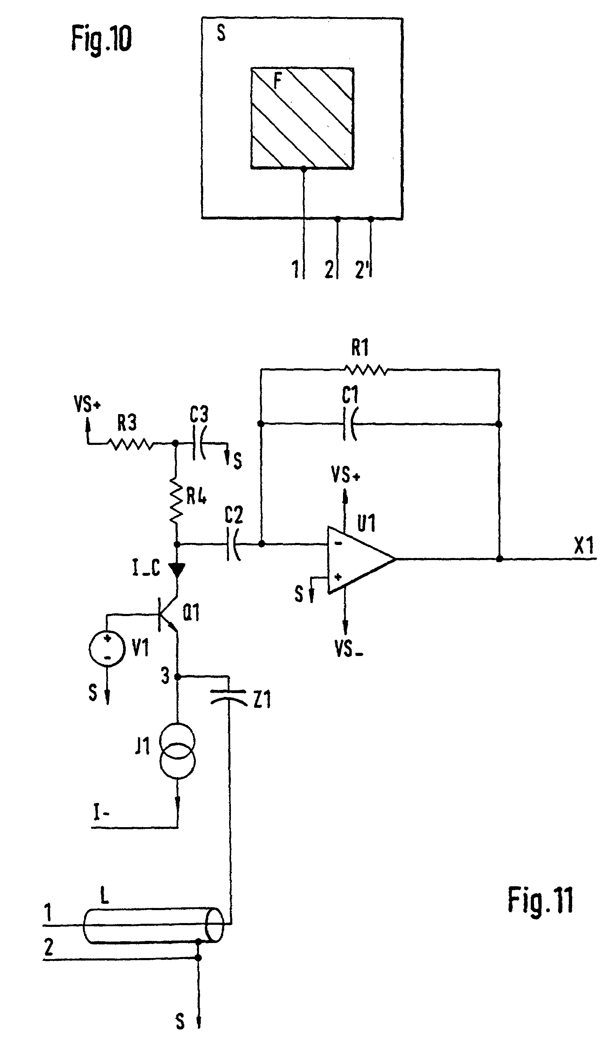

Anstelle einer Impedanz R2, die den in den Kollektor bzw. Drain des Transistors Q1 hineinfließenden Wechselstrom I_C in eine Spannung umwandelt, kann alternativ ein aktiver Strom-nach-Spannungswandler eingesetzt werden. Eine derartige Ausgestaltung ist beispielsweise in Fig. 11 dargestellt.

Diese Ausgestaltung weist den Vorteil auf, daß von einem aktiven Strom-nach-Spannungswandler der Kollektor bzw. Drain von Q1 wechselspannungsmäßig mit einer sehr kleinen Impedanz mit dem Knoten S verbunden wird. Da R4 bei dieser Schaltung lediglich den Arbeitspunkt von Q1 einstellt und nicht als Strom-nach-Spannungswandler fungiert, kann dessen Wert sehr viel kleiner gewählt werden als beispielsweise der Widerstand R2 in Fig. 6. Es fließt nur noch ein vernachlässigbar kleiner Wechselstrom über R4, denn der größte Anteil des in den Kollektor bzw. Drain von Q1 fließenden Wechselstroms fließt jetzt durch den aktiven Strom-nach-Spannungswandler, weil dessen Eingangsimpedanz sehr viel kleiner als R4 ist.

Der Vorteil liegt darin, daß R4 viel kleiner gewählt werden kann als R2 in Fig. 6, um die gleiche Strom-nach-Spannungsverstärkung zu erreichen, denn sie wird nicht mehr von R4 sondern vom aktiven Strom-nach-Spannungswandler bestimmt. Ein kleinerer Widerstand R4 erzeugt einen größeren Kollektor- bzw. Draingleichstrom von Q1, und damit eine kleinere Eingangsimpedanz der Gesamtschaltung, denn die Eingangsimpedanz des Transistors in Basis- bzw. Gateschaltung sinkt mit steigendem Kollektor- bzw. Drainstrom.

Als aktiver Strom-nach-Spannungswandler dient zum Beispiel ein zusätzlicher Transistor in Basis- bzw. Gateschaitung sein oder ein Operationsverstärker der als Strom-nach-Spannungswandler beschaltet ist. Diese Möglichkeit ist in Fig. 11 gezeigt. Es ist anzumerken, daß hierbei der Widerstand R4 zwischen dem Kollektor von Q1 und dem Potential S lediglich den Arbeitspunkt von Q1 einstellt.

Der Operationsverstärker U1 bildet mit C1 und R1 einen Strom-nach-Spannungswandler, der den Wechselstrom I_C, der in Q1 über dessen Kollektor bzw. Drain hineinließt in eine Spannungsdifferenz zwischen X1 und S umwandelt. Der Vorteil dieser Schaltung gegenüber einer einzigen Impedanz R2 liegt in der höheren Strom-nach-Spannungsverstärkung.

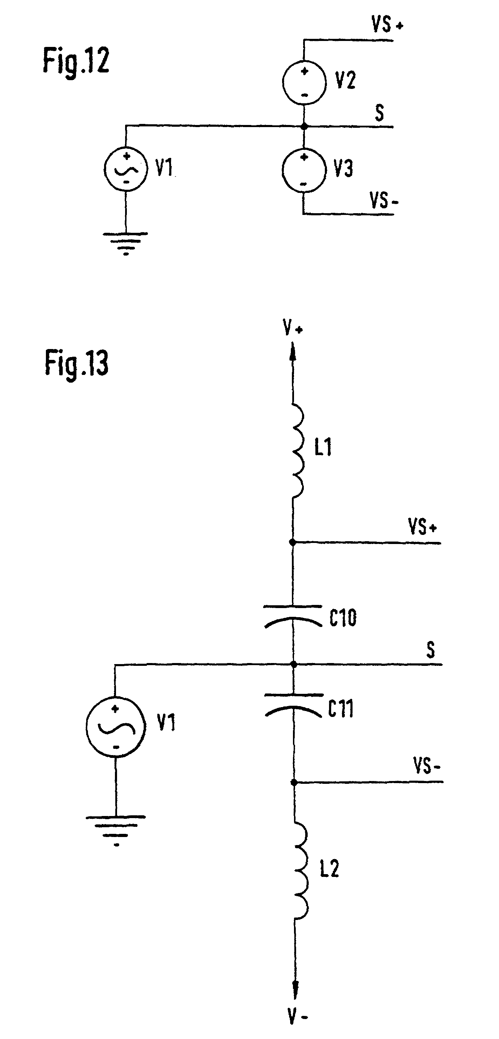

Der Strom-nach-Spannungswandler wird vorteilhaft mit Versorgungsspannungen VS+ und VS- betrieben, die wechseispannungsmäßig auf das Potential der Schirmelektrode geschaltet sind. Ein Ersatzschaltbild einer Schaltung zur Erzeugung der Versorgungsspannungen ist in Fig. 12 dargestellt.

VS+ ist die Summe der Wechselspannung am Punkt S und einer Gleichspannung V2, VS- ist die Summe der Wechselspannung am Knoten S und einer Gleichspannung V3. Damit wird die Gleichtaktspannung am Transistor Q1 und Verstärker U1 eliminiert, die aus einer Wechselspannung V1 bestehen würde und zu einem zusätzlichen Fehler bei der Kapazitätsmessung von C_FG beitragen würde.

Außerdem kann damit jede parasitäre Kapazität zwischen jedem Knoten des Strom-nach-Spannungswandlers nach Masse G, die die Messung verfälschen würde, bei der Realisation der Schaltung bei entsprechender Auslegung des Layouts der gedruckten Schaltung oder der integrierten Schaltung soweit unterdrückt werden, daß sie das Meßresultat nicht wesentlich verfälschen. Dies verhindert das Abfließen von Strömen von den Knoten des Strom-nach-Spannungswandiers nach Masse G und damit die Verfälschung des Meßresultats.

Die Elimination dieser parasitären Kapazitäten setzt weiterhin voraus, daß kein Leiter, der nicht das gleiche Wechselspannungspotential wie S besitzt, in die Nähe der Knoten des Strom-nach-Spannungswandlers kommt. In den Fällen in denen dies trotzdem der Fall ist, muß der entsprechende Leiter von einem Leiter der das gleiche Potential wie S besitzt gegenüber den Knoten des Strom-nach-Spannungswandlers abgeschirmt werden.

Wichtig bei der praktischen Auslegung der Schaltung in Fig. 12 ist, daß die Wechselspannungsdifferenzen zwischen den Knoten S und VS+ bzw. S und VS- möglichst klein ist.

Eine technische Realisierung der Schaltung der Spannungsversorgung ist in Fig.13 gezeigt. L1 und L2 sind Induktivitäten, entweder drahtgewickelte Spulen oder elektronisch simulierte Induktivitäten oder Widerstände. V+ und V- sind die Versorgungsspannungen der Schaltung.

Die Wechselspannungsdifferenzen zwischen den Knoten S und VS+ bzw. S und VS- hängen von den lmpedanzen der Schaltungselemente in dem Frequenzbereich in dem die Schaltung arbeitet ab. Diese Spannungsdifferenz steigt, wenn die Impedanz der Spulen bzw. Widerstände sinkt und/oder wenn die lmpedanz der Kondensatoren steigt. Die Impedanz der Kondensatoren ist aus verschiedenen Gründen auf ein Minimum beschränkt, die Impedanz der Spulen kann zwar größer gewählt werden als die Impedanz der Widerstände in dem Frequenzbereich in dem die Schaltung arbeitet, sie ist aber auch begrenzt.

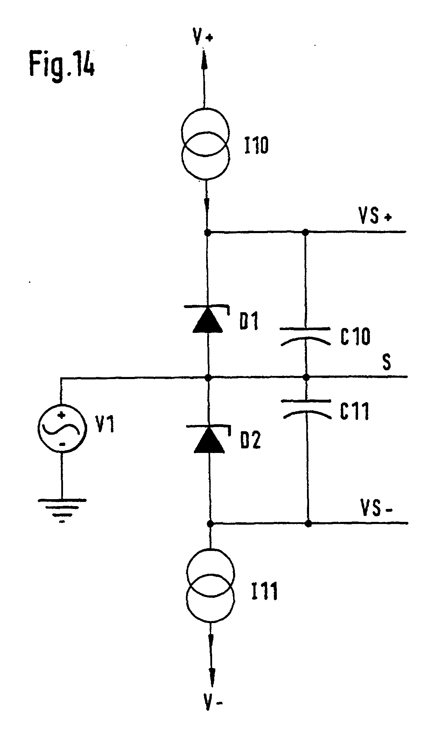

Eine andere Möglichkeit ist in Fig. 14 gezeigt. I10 und I11 sind Stromquellen. D1 und D2 sind Referenzspannungselemente, zum Beispiel Z-Dioden oder aktive Referenzspannungsquellen. I10 und I11 stellen den Versorgungsstrom für die sich zwischen VS+ und VS- befindenden Schaltung bereit. D1 und D2 stellen die Versorgungsspannung für diese Schaltung ein, gleichzeitig halten sie die Spannungsdifferenzen über I10 und I11 über einem bestimmten Minimum, unter dem die Stromquellen I10 und I11 nicht arbeiten können. Der Vorteil dieser Schaltung gegenüber der in Fig. 13 besteht darin, daß die

Stromquellen einen höheren Innenwiderstand in dem Frequenzbereich, in dem die Schaltung arbeitet, haben können als L1 oder L2 in der Schaltung von Fig.13.

Es ist anzumerken, daß die Schaltungen aus Fig. 5, Fig. 6 und Fig. 11 eine ideale Leitungsverbindung zwischen dem Schirmanschluß der Meßelektrode und der Auswerteschaltung voraussetzen.

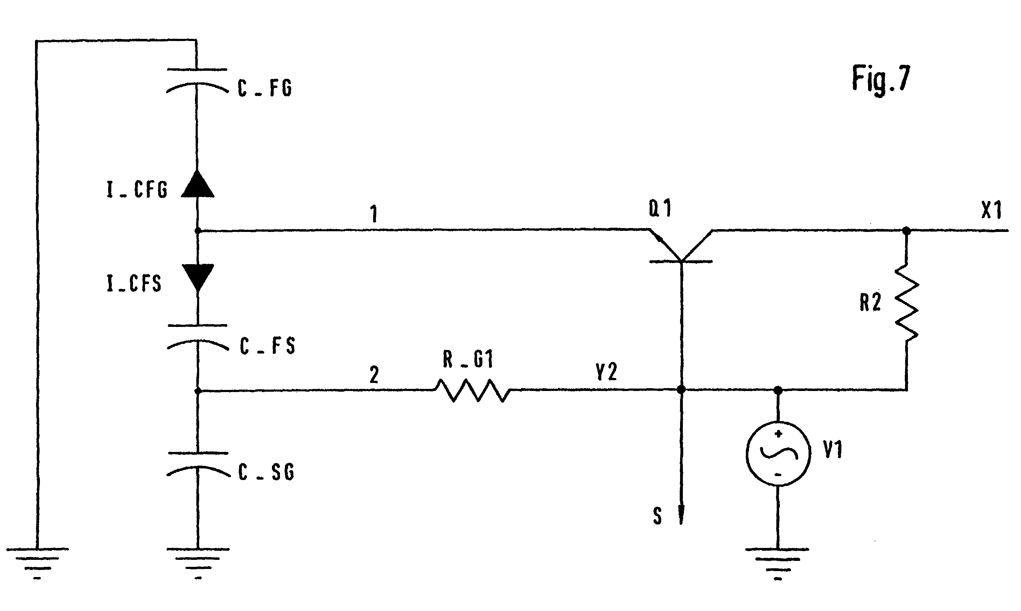

Im Falle einer nichtidealen Leitungsverbindung, muß beispielsweise die Schaltung aus Fig. 5 und Fig. 6 durch einen zusätzlichen Ersatzwiderstand R_G1 ergänzt werden. Ein derartig ergänztes Kleinsignalersatzschaltbild ist in Fig. 7 gezeigt, wobei in diesem Schaltbild ebenfalls die Spannungsquelle V1 aus Fig. 4 eingetragen ist.

Der Widerstand R_G1 wird in den Leitungspfad zwischen der Schirmelektrode 2 und der Auswerteschaltung gelegt. Der Strom, der über R_G1 fließt, bewirkt einen Spannungsabfall an R_G1. Folglich ist die Wechselspannungsdifferenz zwischen Knoten 2 und Masse G von der von der Spannungsquelle V1 erzeugten Wechselspannung verschieden. Somit fließt ein nicht vernachlässigbarer Strom I_CFS über die Kapazität C_FS, der einen nicht vernachlässigbaren Meßfehler verursacht.

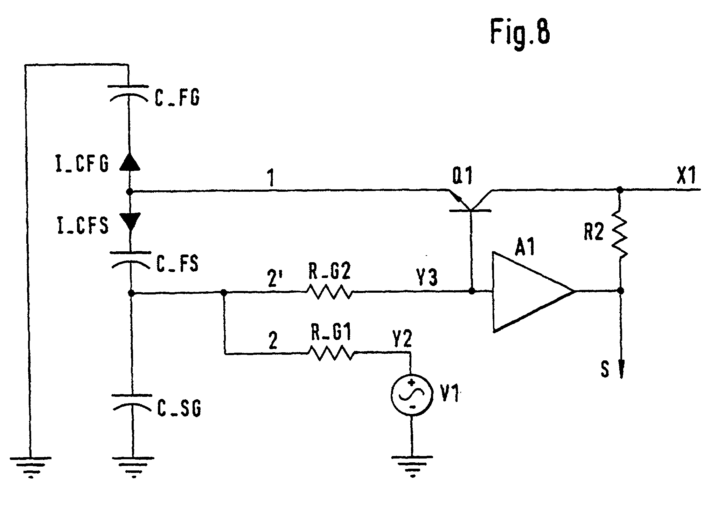

Das Kleinsignalersatzschaltbild einer vorteilhaften Ausgestaltung der Auswerteschaltung zum Verringern jenes Meßfehlers ist in Fig. 8 gezeigt, die dazugehörige Messelektrode ist in Fig. 10 dargestellt. Bei dieser verbesserten Auswerteschaltung wird eine zusätzliche Leitungsverbindung mit einem Ersatzwiderstand R_G2 zwischen die Meßelektrode und die Auswerteschaltung geschaltet, die den Anschluß 2' der Meßelektrode mit Knoten Y3 der Auswerteschaltung verbindet.

Die Meßelektrode wird, wie in Fig. 5 und Fig. 6, über den Anschluß 2 von der Wechselspannungsquelte V1 gespeist. Der Anschluß 2' der Meßelektrode ist über die zusätzliche Leitungsverbindung mit dem Knoten Y3 der Auswerteschaltung verbunden. Mit der am Knoten Y3 anliegenden Spannung wird einerseits die Basis bzw. das Gate des Transistors Q1, andererseits der Eingang eines Verstärkers A1, dessen Wechselspannungsverstärkung nahe bei eins liegt, gespeist. Der Verstärker A1 treibt die Spannung an dem Knoten S der Auswerteschaltung, die zur Gleichtaktunterdrückung der Schaltung verwendet wird.

Die Wechselstromeingangsimpedanz des Verstärkers A1 ist so groß, daß sein Eingangswechselstrom vernachlässigbar klein ist. Der Wechselstrom, der in die Basis bzw. das Gate des Transistors Q1 fließt ist in diesem Fall ebenfalls vernachlässigbar klein, so daß der Wechselspannungsabfall an R_G2, der durch den über R_G2 fließenden Wechselstrom erzeugt wird, ebenfalls vernachlässigbar klein wird.

Die Wechselspannung am Knoten Y3 ist somit bis auf einen vernachlässigbaren Unterschied dieselbe wie die an den Anschlüssen 2 und 2' der Meßelektrode. Somit fließt nur noch ein vernachlässigbarer Strom I_CFS über die Kapazität C_FS, der nur noch einen vernachlässigbaren Meßfehler zur Folge hat.

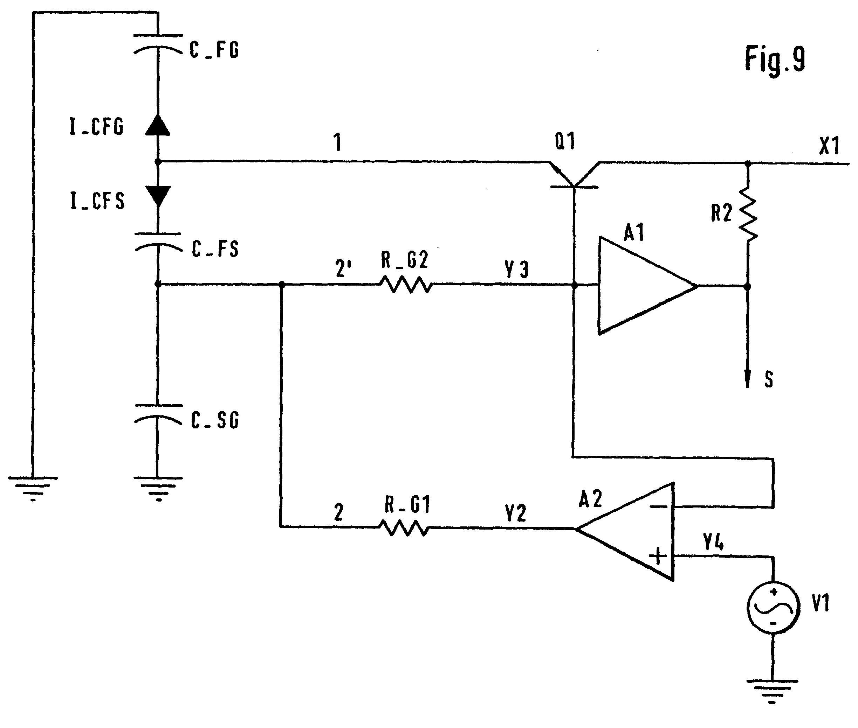

Eine weitere vorteilhafte Ausgestaltung einer Auswerteschaltung ist in Fig. 9 dargestellt. Mit dieser Auswerteschaltung kann eine Verringerung der Empfindlichkeit des Gesamtsystems verhindert werden, die bei einer schaltungstechnischen Kompensation des Stromflusses I_CFS auftritt. Wird der Stromfluß I_CFS bei den Schaltungen nach Fig. 5, 6 oder 8 beispielsweise mit Hilfe einer zusätzlichen Schaltung zu null gemacht bewirkt die Abschwächung der von V1 erzeugten Referenzspannung durch die an C_FS anliegenden Spannung in der

Tat eine Verringerung der Empfindlichkeit des Gesamtsystems.

Eine Verbesserung wird erzielt, indem die Schaltung aus Fig. 8 durch einen zusätzlichen Fehlerverstärker A2 ergänzt wird, der über seinen Ausgang Y2 den Anschluß 2 der Meßelektrode ansteuert. Der invertierende Eingang von A2 ist mit dem Knoten Y3 verbunden, der nichtinvertierende Eingang von A2 ist mit der Referenzwechselspannungsquelle V1 verbunden.

Wegen des vernachlässigbaren Stromes, der über den Widerstand R_G2 fließt, ist die Spannung zwischen Y3 und der Masse ungefähr gleich der Spannung zwischen dem Anschluß 2' und der Masse. Der Fehlerverstärker A2 regelt die Spannung an seinem Ausgang Y2 so nach, daß die Spannungsdifferenz zwischen seinem invertierenden und nichtinvertierenden Eingang vernachlässigbar klein wird. Folglich liegt an Y3 und Y4 die gleiche Spannung an. Damit ist die Spannung an den Anschlüssen 2 und 2' die gleiche, wie die Referenzwechselspannung von V1 und eine Verringerung der Empfindlichkeit tritt nicht auf.

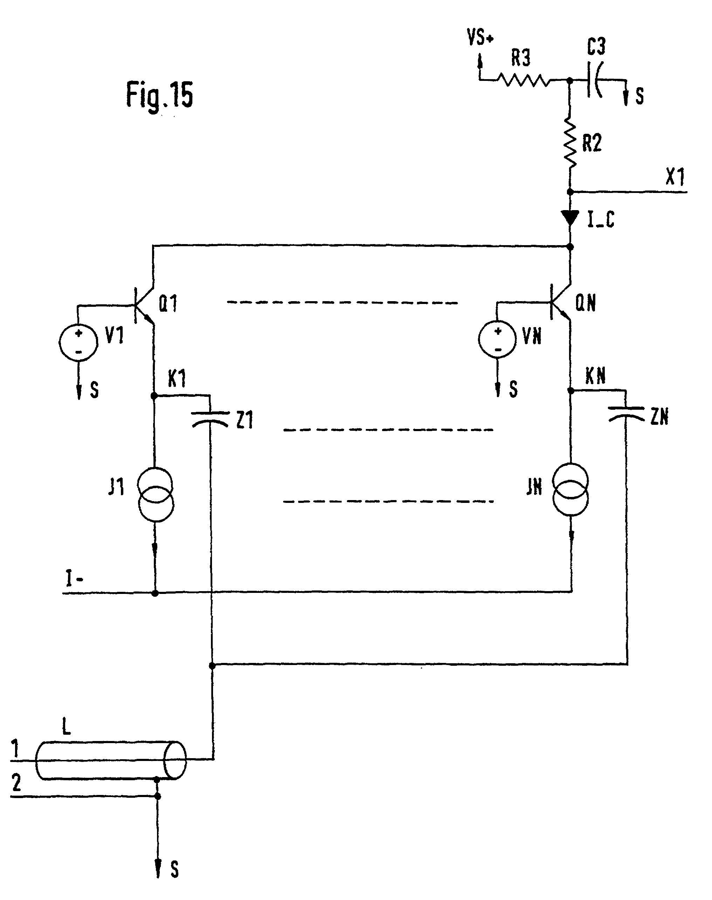

Eine weitere vorteilhafte Ausgestaltung der Auswerteschaltung ist in Fig. 15 dargestellt. Bei dieser Ausgestaltung werden mehrere Transistoren Q1 bis QN in Basis- bzw. Gateschaltung parallelgeschaltet, um die Eingangsimpedanz des Strom-nach-Spannungswandlers zu verringern. Die Kondensatoren Z1 bis ZN müssen eine lmpedanz besitzen, die kleiner als oder mindestens im Bereich liegen muß wie die lmpedanz von Q1 bis QN zwischen den Knoten K1 bis KN und S. Wenn eine Gleichspannungsdifferenz zwischen den Knoten 1 und 2 toleriert werden kann, kann entweder einer der Kondensatoren Z1 bis ZN weggelassen werden, wenn die Transistoren Q1 bis QN sich nicht nur vernachlässigbar unterscheiden, oder alle Kondensatoren Z1 bis ZN wenn die Transistoren Q1 bis QN bis auf vernachlässigbare Unterschiede identisch sind.

Für die Auswertung des Ausgangsstroms I_C und für die Erzeugung der Versorgungsspannungen VS- und VS+ gelten die gleichen Überlegungen wie bei der Schaltung in Fig. 6.

Es ist anzumerken, daß die Verbesserungen die im Zusammenhang mit der Auswerteschaltung nach Fig. 5 und 6 beschrieben wurde, auch bei Schaltungen eingesetzt werden können, bei denen mehrere Transistoren Q1 bis QN wechselspannungsmäßig parallelgeschaltet sind. In diesem Fall werden alle Basen bzw. Gates der Transistoren Q1 bis QN über eine gemeinsame, mit dem Anschluß 2' der Meßelektrode verbundene Leitung angesteuert.

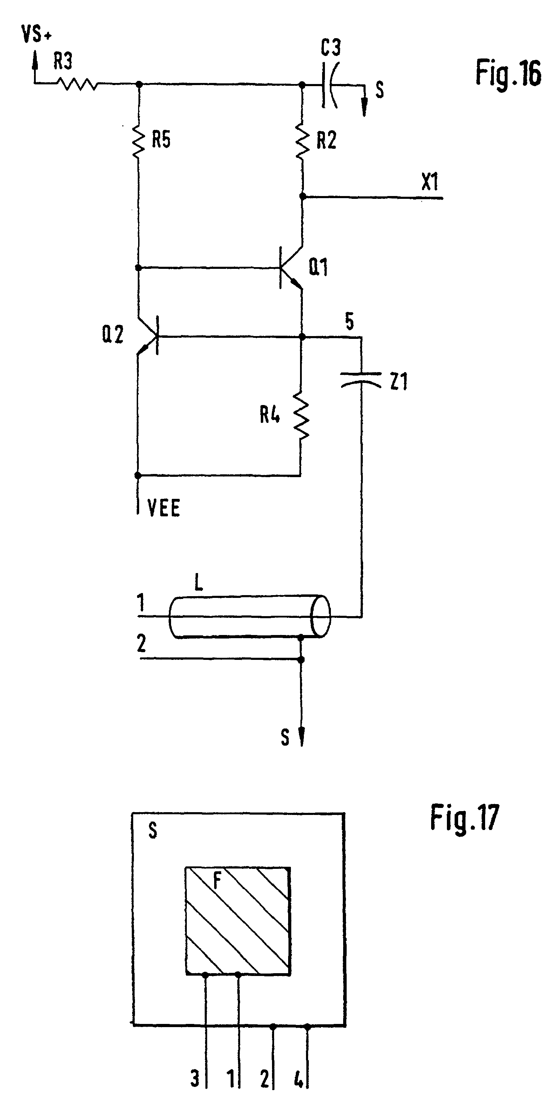

Eine weitere vorteilhafte Ausgestahtung des Strom-nach-Spannungswandlers ist in Fig. 16 dargestellt. Q1 und Q2 sind Bipolar- oder Feldeffekttransistoren, Q1 wird in Basis- bzw. Gateschaitung betrieben. VEE wird mit einem Knoten verbunden, der das gleiche Wechselspannungspotential wie S besitzt. Q2 mißt den Spannungsabfall über R4 und steuert Q1 so nach, daß der Spannungsabfall über R4 minimiert wird. Damit wird die Eingangsimpedanz des Strom-nach-Spannungswandlers gegenüber der Schaltung in Fig. 6 weiter verringert.

Der Kondensator C1 muß eine lmpedanz besitzen, die kleiner als oder mindestens im Bereich liegen muß wie die Impedanz, die durch die Regelung von Q1 und Q2 zwischen den Knoten 5 und S erzeugt wird. Wenn eine Gleichspannungsdifferenz zwischen den Knoten 1 und 2 toleriert werden kann, kann C1 weggelassen werden.

Im folgenden werden verschiedene Schaltungen zur Überprüfung der vorbeschriebenen kapazitiven Sensoren beschrieben. Anhand dieser Prüfschaltungen kann ein entsprechender Sensor bzw. seine Zuleitungen und Auswerteschaltung ständig auf seine Funktionsfähigkeit überprüft werden. Dies ist insbesondere im Sicherheitsbereich bei Fahrzeugen von großer Wichtigkeit, da hier der Airbag beim Ausfall des Sensors in einen Standardmodus geschaltet werden muß.

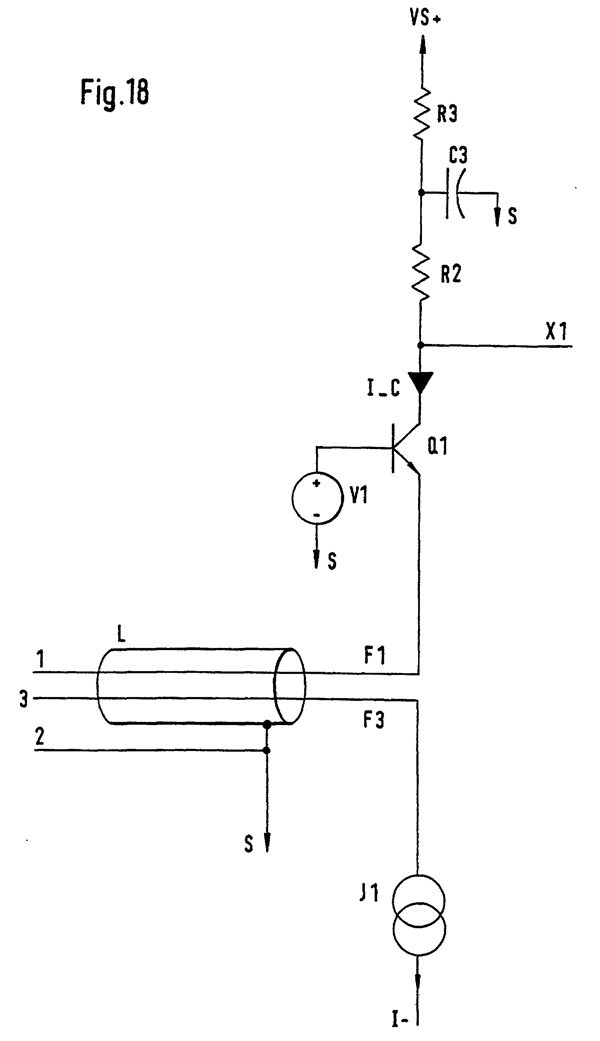

Zur Überprüfung der Zuleitungen der Fühlerelektrode F, wird eine zusätzliche Zuleitung 3 zur Fühlerelektrode eingeführt. Dies ist in den Fig. 17 und 18 dargestellt. Wenn eine dauerhafte Gleichspannung an der Fühlerelektrode toleriert werden kann, kann die Stromquelle J1, die den Arbeitspunkt des Strom-nach-Spannungswandlers einstellt, zur Zuleitungswiderstandsmessung verwendet werden (Fig. 18). Die Gleichspannungsdifferenz zwischen den Punkten S1 und S3 wird gemessen. Die Höhe des Gleichstroms, der von J1 geliefert wird, ist bekannt. Aus der gemessenen Spannungsdifferenz und dem bekannten Gleichstrom kann der Zuleitungswiderstand der Zuleitungen 1 und 3 bestimmt werden. J1 kann auch durch einen Widerstand ersetzt werden. Es ist anzumerken, daß diese Messung während der normalen Kapazitätsmessung stattfinden kann, sie beeinträchtigt den Meßvorgang nicht.

Wenn keine dauerhafte Gleichspannung an der Fühlerelektrode toleriert werden kann, wird die Fühlerelektrode durch eine Kapazität von der Auswerteschaltung getrennt. In diesem Fall muß die Kapazitätsmessung zur Zuleitungswiderstandsmessung unterbrochen werden. Es wird ein Gleichstrom von F1 nach F3 oder umgekehrt fließen gelassen. Aus der Spannungsdifferenz zwischen F1 und F3 kann der Zuleitungswiderstand von 1 und 3 zusammen berechnet werden.

Mittels der in Fig. 18 dargestellten Schaltung läßt sich auch der Isolationswiderstand zwischen der Fühlerelektrode und der Schirmelektrode überprüfen. Der Gleichstromisolationswiderstand zwischen Fühler- und Schirmelektrode kann während der normalen Kapazitätsmessung dadurch bestimmt werden, indem die Gleichspannungsdifferenz zwischen dem Fühlerelektrodenzuleitungsanschluß, F1 oder F3 und dem Punkt S gemessen wird. Wenn kein Gleichstrompfad zwischen Fühler- und Schirmelektrode besteht, wird diese Spannung fast ausschließlich durch Q1 bestimmt (Basis-Emitterspannung bzw. Gate-Sourcespannung). Wenn ein Gleichstrompfad mit genügend kleinem Widerstand zwischen Fühler- und Schirmelektrode besteht, wird die Spannungsdifferenz zwischen F1 oder F3 und S von dem Strom der J1 liefert und dem Widerstand zwischen Fühler- und Schirmelektrode bestimmt. Der Widerstand kann aus dem bekannten von J1 gelieferten Strom und der gemessenen Spannungsdifferenz bestimmt werden.

Auch der Zuleitungswiderstand zur Schirmelektrode kann ohne Unterbrechung der Kapazitätsmessung durchgeführt werden.

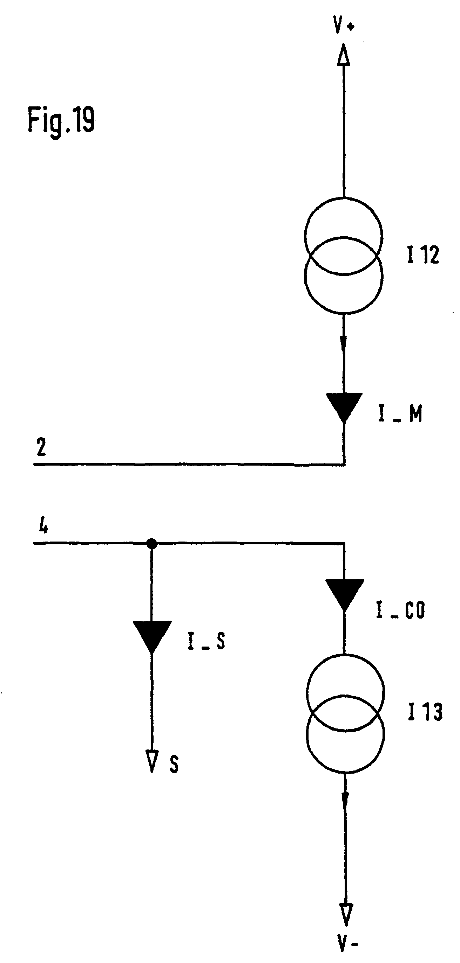

Es wird hierzu eine zusätzliche Zuleitung 4 zur Schirmelektrode eingeführt (Fig. 19). Über die Stromquelle I12 (Fig. 19) wird ein Meßgleichstrom I_M in die Schirmelektrodenzuleitung 2, 4 eingeprägt. Die Gleichspannungsdifferenz, die zwischen den Knoten 2 und 4 gemessen wird, ist damit proportional zum

Widerstand der Zuleitungen 2 und 4. I13 ist optional und hat den Zweck, den Gleichstrom I_S, der in die Spannungsquelle V1 die den Knoten S versorgt, zu minimieren. I_CO soll möglichst dieselbe Größe wie I_M haben, in dem Fall wird I_S minimiert. Die Minimierung von I_S ist wichtig weil sonst die Messung des Isolationswiderstands zwischen Schirmelektrode nach Masse oder einer anderen Gleichspannung gegenüber Masse verfälscht wird, wenn während der Kapazitätsmessung sowohl der Zuleitungswiderstand zur Schirmelektrode als auch der Isolationswiderstand zwischen Schirmelektrode nach Masse oder einer anderen Gleichspannung gegenüber Masse gemessen werden soll.

Zur Messung des Isolationswiderstandes Schirmelektrode nach Masse oder einer anderen Gleichspannung gegenüber Masse wird die Wechselspannungsquelle V1 durch eine Quelle ersetzt, die einen kleinen Wechselspannungsinnenwiderstand hat und einen definierten Gleichspannungsinnenwiderstand und einen definierten einstellbaren Gleichspannungsanteil besitzt. Bei Verwendung der Schaltung in Fig. 14 und wenn die Ströme der Stromquellen I10 und I11 etwa identisch sind, kann der Isolationswiderstand zwischen Schirmeiektrode und einer extemen Gleichspannung bzw. Masse während dem normalen Meßvorgang bestimmt werden. Die Differenz zwischen der Gleichspannung am Punkt S und der an V1 eingestellten Gleichspannung wird bestimmt und daraus kann unter Verwendung des Gleichspannungsinnenwiderstands von V1 der Isolationswiderstand zwischen Schirmelektrode und einer externen Gleichspannung bzw. Masse berechnet werden.

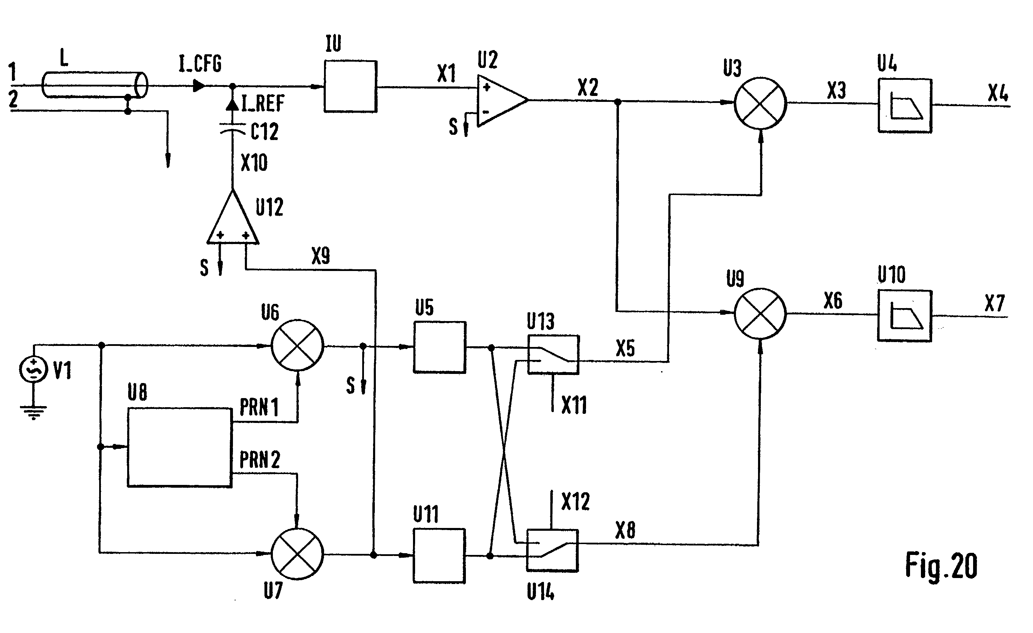

Die gesamte Kapazitätsmeßschaltung kann während der Kapazitätsmessung selbst überprüft und kalibriert werden. (Fig. 20)

An 1 und 2 wird die Meßelektrode angeschlossen. Wie bisher erzeugt die zu messende Kapazität eine Spannung an X2.

Die Wechselspannung, mit der der Knoten S angesteuert wird, wird im Modulator U6 mit einer binären Pseudozufallsfolge PRN1, die vom Pseudozufallsgenerator U8 erzeugt wird, moduliert. Das daraus entstehende Spread-Spectrumsignal wird verwendet um S anzusteuern. Mit Phasenschieber U5 und elektronischem Schalter U13 wird wie bisher der Demodulator U3 angesteuert. U3 bildet zusammen mit Tiefpaßilter U4 aus der Wechselspannung X2 eine Gleichspannung am Knoten X4, die von der zu messenden Kapazität abhängt.

Um den Teil der Meßschaltung, der aus einem Strom der in den Strom-nach-Spannungswandler IU fließt in eine Spannung an X2 umwandelt, zu überprüfen, wird mit Kondensator C12 ein Referenzstrom I_REF in den Strom-nach-Spannungswandler eingespeist. Der Referenzstrom I_REF wird vom Kondensator C12 und von der Spannungsdifferenz zwischen X10 und S bestimmt. Diese Spannungsdifferenz wird wie folgt erzeugt:

Der Pseudozufallsgenerator U8 erzeugt eine zweite Pseudozufallssequenz, PRN2, die orthogonal zur Sequenz PRN1 ist. Das bedeutet daß es keine Korrelation zwischen den Sequenzen PRN1 und PRN2 gibt. PRN2 moduliert die Wechselspannung die von V1 erzeugt wird, daraus entsteht die Spannung am Knoten X9. Die Spannung an X9 wird zu der Spannung an S mit dem Addierer U12 addiert und bildet die Referenzspannung X10.

Dadurch, daß es keine Korrelation zwischen den Sequenzen PRN1 und PRN2 gibt, trägt der Anteil an der Wechselspannung von X2, der von X10 stammt, nicht zur Bildung der Gleichspannung am Ausgang der Demodulators und Tiefpasses U3 und U4 bei. Die Spannung an X4 wird nicht von dem Referenzstrom I_REF beeinflußt.

Die Höhe des Referenzstromes I_REF kann mit dem Demodulator U9 und Tiefpaß U10 gemessen werden. Der Demodulator U9 wird über den Phasenschieber U11 und dem elektronischen Schalter U14 von dem gleichen Signal an X9 angesteuert, das den Referenzstrom I_REF erzeugt. Die Spannung an X7 ist also ein Maß für die Höhe des Referenzstromes und dem Wechselstrom-nach-Gleichspannungsverstärkungsfaktor von IU, U2, U9 und U10. Die Spannung an X7 hängt nicht von dem Strom I_CFG ab, der von der zu messenden Kapazität generiert wird. Damit kann mit der Messung der Spannung an X7 der Wechselstrom-nach-Gleichspannungsverstärkungsfaktor von IU, U2, U9 und U10 bestimmt und die Funktion von IU und U2 überprüft werden.

Um den gesamten Signalweg vom Eingang von IU bis zum Ausgang des Tiefpasses U4 zu überprüfen, werden die elektronischen Schalter U13 und U14 mit den Steuersignalen X11 und X12 umgeschaltet. Damit erhält Demodulator U3 die phasenverschobene Version der Spannung an X9 und Demodulator U9 die phasenverschobene Version der Spannung an S. Die Spannung an X4 hängt damit nur vom Referenzstrom I_REF ab, und die Spannung an X7 nur vom Strom I_CFG der von der zu bestimmenden Kapazität erzeugt wird, Damit wird mit der Messung der Spannung an X4 und unter Berücksichtigung des bekannten Referenzstromes I_REF der Wechselstrom-nach-Gleichspannungsverstärkungsfaktor von IU, U2, U3 und U4 bestimmt.

Um die Kapazitätsmessung für möglichst kurze Zeit zu unterbrechen, wird die Gleichspannung an X7 gemessen, die wegen den umgeschalteten Schalter U13, U14 jetzt ein Maß für die zu bestimmende Kapazität ist. Der Wechselstrom-nach-Gleichspannungsverstärkungsfaktor von IU, U2, U9 und U10 ist schon bekannt denn er wurde vorher gemessen.

Die Schalter U13, U14 werden zusammen abwechselnd umgeschaltet, damit eine periodischen Überprüfung der Wechselstrom-nach-Gleichspannungsverstärkungsfaktoren möglich ist.

## Patentansprüche

1. Kapazitiver Sensor, mit einer Fühlerelektrode (F), einer in einem gewissen Abstand zur Fühlerelektrode (F) angeordneten Schirmelektrode (S) und einer Auswerteschaltung, wobei die Fühlerelektrode (F) und die Schirmelektrode (S) mit der Auswerteschaltung verbunden sind und die Schirmelektrode (S) mit einer Wechselspannung beaufschlagt wird, und wobei die Auswerteschaltung einen zwischen die Fühlerelektrode (F) und die Schirmelektrode (S) geschalteten Strom-nach-Spannungswandler aufweist, der einen von der Fühlerelektrode (F) zur Masse abfließenden Strom in eine dazu proportionale Spannung umwandelt, **dadurch gekennzeichnet, daß** zwischen dem Strom-nach-Spannungswandler und der Fühlerelektrode (F) ein erster Transistor verstärker (Q1) derart verschaltet ist, daß eine Spannungsdifferenz zwischen der Schirmelektrode (S) und der Fühlerelektrode (F) minimiert wird.

2. Kapazitiver Sensor gemäß Anspruch 1, **dadurch gekennzeichnet, daß** der Transistor verstärker (Q1) einen in Basisschaltung betriebenen Bipolartransistor oder einen in Gateschaltung betriebenen Feldeffekttransistor umfaßt.

3. Kapazitiver Sensor gemäß einem der Ansprüche 1 oder 2, **dadurch gekennzeichnet, daß** der Strom-nach-Spannungswandler eine passive Impedanz umfaßt.

4. Kapazitiver Sensor gemäß einem der Ansprüche 1 oder 2, **dadurch gekennzeichnet, daß** der Strom-nach-Spannungswandler einen aktiven Strom-nach-Spannungswandler umfaßt.

5. Kapazitiver Sensor gemäß einem der vorhergehenden Ansprüche, **gekennzeichnet durch** einen Regeltransistor (Q2), der beim Auftreten einer Spannungsdifferenz zwischen Schirmelektrode (S) und der Fühlerelektrode (F) den Transistorverstärker (Q1) derart nachregelt, daß die Spannungsdifferenz minimiert wird.

6. Kapazitiver Sensor gemäß einem der Ansprüche 1 bis 5, **dadurch gekennzeichnet, daß** dem ersten Transistorverstärker (Q1) mehrere weitere Transistorverstärker parallel geschaltet sind.

7. Kapazitiver Sensor gemäß einem der vorhergehenden Ansprüche, **dadurch gekennzeichnet, daß** die Versorgungsspannungen des Strom-nach-Spannungswandlers wechselspannungsmäßig auf das Potential der Schirmelektrode (S) geschaltet sind.

## Claims

1. Capacitive sensor, with a detector electrode (F), a shield electrode (S) arranged at a certain distance from said detector electrode (F) and an evaluation circuit, wherein said detector electrode (F) and said shield electrode (S) are connected to said evaluation circuit, and an alternating voltage is applied to said shield electrode (S), and wherein said evaluation circuit comprises a current to voltage converter connected between said detector electrode (F) and said shield electrode (S), which converts a current flowing from said detector electrode (F) to ground into a voltage proportional to this, **characterised in that** a first transistor amplifier (Q1) is connected between said current to voltage converter and said detector electrode (F) and that a voltage difference between said shield electrode (S) and said detector electrode (F) is minimised.

2. Capacitive sensor according to claim 1, **characterised in that** said transistor amplifier (Q1) comprises a bipolar transistor operated as a common-base transistor or a field-effect transistor operated as a common-gate transistor.

3. Capacitive sensor according to any one of claims 1 or 2, **characterised in that** said current to voltage converter comprises a passive impedance.

4. Capacitive sensor according to any one of claims 1 or 2, **characterised in that** said current to voltage converter comprises an active current to voltage converter.

5. Capacitive sensor according to any one of the preceding claims, **characterised by** a regulating transistor (Q2), which regulates said transistor amplifier (Q1) when a voltage difference occurs between said shield electrode (S) and said detector electrode (F) in such a manner that said voltage difference is minimised.

6. Capacitive sensor according to any one of claims 1 to 5, **characterised in that**, several further transistor amplifiers are connected in parallel to said first transistor amplifier (Q1).

7. Capacitive sensor according to any one of the preceding claims, **characterised in that** said supply voltages of said current to voltage converter are connected as an alternating voltage to the potential of said shield electrode (S).

## Revendications

1. Capteur capacitif avec une électrode de sonde (F), une électrode de blindage (S) disposée à distance de l'électrode de sonde (F) et un circuit d'évaluation, l'électrode de sonde (F) et l'électrode de blindage (S) étant reliées au circuit d'évaluation et l'électrode de blindage (S) étant alimentée en une tension alternative, le circuit d'évaluation présentant un convertisseur de courant en tension raccordé entre l'électrode de sonde (F) et l'électrode de blindage (S) et qui convertit un courant s'écoulant de l'électrode de sonde (F) à la masse en une tension qui lui est proportionnelle, **caractérisé en ce qu'**entre le convertisseur de courant en tension et l'électrode de sonde (F) est branché un premier amplificateur à transistor (Q1) de telle sorte qu'une différence de tension entre l'électrode de blindage (S) et l'électrode de sonde (F) soit minimisée.

2. Capteur capacitif selon la revendication 1, **caractérisé en ce que** l'amplificateur à transistor (Q1) comprend un transistor bipolaire fonctionnant en circuit de base ou un transistor à effet de champ fonctionnant en circuit de grille.

3. Capteur capacitif selon l'une des revendications 1 ou 2, **caractérisé en ce que** le convertisseur de courant en tension comprend une impédance passive.

4. Capteur capacitif selon l'une des revendications 1 ou 2, **caractérisé en ce que** le convertisseur de courant en tension comprend un convertisseur de courant en tension actif.

5. Capteur capacitif selon l'une des revendications précédentes, **caractérisé par** un transistor de réglage (Q2) qui, en cas d'apparition d'une différence de tension entre l'électrode de blindage (S) et l'électrode de sonde (F), règle l'amplificateur à transistor (Q1) de telle sorte que la différence de tension soit minimisée.

6. Capteur capacitif selon l'une des revendications 1 à 5, **caractérisé en ce que** plusieurs autres amplificateurs à transistor sont branchés en parallèle sur le premier amplificateur à transistor (Q1).

7. Capteur capacitif selon l'une des revendications précédentes, **caractérisé en ce qu'**en ce qui concerne la tension alternative, les tensions d'alimentation du convertisseur de courant en tension sont raccordées au potentiel de l'électrode de blindage (S).
